# EUROPÄISCHE PATENTSCHRIFT

(11) **EP 3 577 871 B1**
(45) Veröffentlichungstag und Bekanntmachung des Hinweises auf die Patenterteilung: **25.11.2020**
(21) Anmeldenummer: 17711592.0
(22) Anmeldetag: 10.03.2017
(51) Int. Cl.: H04L 29/06

(54) **VERFAHREN UND VORRICHTUNG ZUR MODULAREN LENKUNG EINES AVB-STREAMS**
METHOD AND DEVICE FOR THE MODULAR ORIENTATION OF AN AVB STREAM
PROCÉDÉ ET DISPOSITIF PERMETTANT L'ORIENTATION MODULAIRE D'UN FLUX AVB

(43) Veröffentlichungstag der Anmeldung: 11.12.2019
(73) Patentinhaber: Siemens Aktiengesellschaft, 80333 München (DE)
(72) Erfinder: CHEN, Feng, 90537 Feucht (DE); GÖTZ, Franz-Josef, 91180 Heideck (DE); KIESSLING, Marcel, 91235 Velden (DE); NGUYEN, An Ninh, 90427 Nürnberg (DE); SCHMITT, Jürgen, 90766 Fürth (DE)
(86) Internationale Anmeldenummer: PCT/EP2017/055643
(87) Internationale Veröffentlichungsnummer: WO 2018/162071

(56) Entgegenhaltungen:
- WO-A1-2010/094595
- US-A1- 2012 314 597

## Beschreibung

Durch die Erweiterungen der IEEE Arbeitsgruppe TSN (Time Sensitive Networking, IEEE 802.1) wird Echtzeitkommunikation in standardisierten Ethernet Netzwerken ermöglicht. Für die Konfiguration des Netzwerkes wird ein Reservierungsprotokoll verwendet (Message Session Relay Protocol, MSRP, RFC 4975), welches sich um die notwendige Einrichtung der Verbindungen (Streams) und die Ressourcenverwendung kümmert.
In der TSN Arbeitsgruppe erfolgt die Weiterentwicklung der Ergebnisse der AVB Arbeitsgruppe. Bei AVB (Audio/Video Bridging, IEEE 802.1) wurde das Reservierungsprotokoll entwickelt - es ist für den Einsatz in Heimnetzwerken definiert.

Eine Redundanzfunktionalität des Netzwerkes wurde nicht berücksichtigt - eine eventuelle Umschaltung von Pfaden führte immer zum kompletten Abbau aller aktiven Streams im Netzwerk. Im gesamten Netzwerk gab es nur eine einzige aktive Verbindung - redundante Verbindungen sind in Heimnetzwerken typisch nicht vorhanden. Das Reservierungsprotokoll erledigte die Einrichtung der Streams und die Konfiguration des Netzwerkes. Informationen über die verfügbaren Streams werden an alle Endgeräte weitergegeben. Dies ist notwendig, da vorab eine Prüfung der verfügbaren Ressourcen erfolgt.

Bisherige Redundanz-Ansätze im industriellen Umfeld (z. B. Ringredundanz) sind nur in speziellen Netzwerken einsetzbar und berücksichtigen nicht die für die Stream Einrichtung notwendige lokale Konfiguration der Netzwerkkomponenten.

Bisher müssen alle Endgeräte alle Stream-Informationen empfangen können. Eine einfachere Implementierung in Endgeräten verringert den Speicherbedarf zur Zwischenspeicherung der nicht benötigten Informationen, die Pakete müssen aber trotzdem empfangen und ausgewertet werden. Bei AVB müssen die Endgeräte entsprechend leistungsfähig sein. Durch das bisherige Design des Protokolls ist dabei die Anzahl der zu verarbeitenden Pakete begrenzt.
Bei steigender Anzahl von Streams entsteht in einfachen Netzwerkteilnehmern eine höhere Netzwerklast. In Industrieanwendungen sollen die Endgeräte jedoch möglichst billig sein, die Hauptaufgabe ist nicht die Datenübertragung, es ist die Erfassung und Auswertung von physikalischen Messwerten. Sehr einfache Endgeräte sind somit nicht möglich.

Industrielle Anwendungen basieren auf der Verarbeitung von mehreren Messwerten die in getrennten Streams übertragen werden und der daraus ergebenen Ansteuerung von Aktoren, ebenfalls mehrere Streams an mehrere Geräte. Die Lage der unterschiedlichen Endgeräte ist dabei in der Regel vom Netzwerk verdeckt - die benötigte Übertragungszeit der einzelnen Verbindungen kennt durch das Reservierungsprotokoll aber nur der Empfänger der Nachricht nach einer erfolgreichen Reservierung.
Durch mehrere Anwendungen in einem Netzwerk steigt die Anzahl der Streams - Endgeräte empfangen aber alle Stream Informationen.

Die Anforderung an eine hohe Verfügbarkeit wurde bislang nicht ausreichend berücksichtigt. Ein gezieltes Umschalten von Verbindungen durch lokales Wissen ist mit den bekannten Verfahren nicht möglich.

Bei dem bekannten Vorgehen existiert weiterhin eine Einschränkung der maximal unterstützten Anzahl von Streams im Netzwerk, da das Protokoll nur eine begrenzte Anzahl von Daten synchronisieren kann.
Beim Einsatz in Industrienetzwerken gibt es dabei neben der Anzahl der Streams noch zusätzliche Anforderungen.

In der WO 2010/094595 A1 oder auch der US 2012/314597 A1 sind Verfahren zur Bereitstellung eines Streaming-Pfades gemäß der beschriebenen Standards dargestellt, welche die Reservierung der von dem Pfad betroffenen Netzelemente End-to-End vom Sender zum Empfänger verhandeln und durchführen.

Es ist daher Aufgabe der Erfindung, ein Verfahren anzugeben, welches das bekannte Verfahren anpasst zur Anwendung im industriellen Bereich mit den folgenden Anforderungen.
Das Verfahren soll für einfache Endgeräte mit wenig Speicher einsetzbar sein. Die Anwendungen verwenden dabei Daten aus vielen 10 Devices (d. h. vielen Streams) - die Übertragungszeit aller Streams ist dabei ebenfalls entscheidend (also der Zeitraum vom Beginn der Übertragung bis zum Ende, auch Make-span genannt).
Darüber hinaus sollen mehrere Anwendungen im Gesamtnetzwerk mit sehr vielen Verbindungen unterstützt werden.
Die Verbindungen müssen dabei auch eine hohe Verfügbarkeit aufweisen.

Die Aufgabe wird gelöst durch ein Verfahren mit den Merkmalen des unabhängigen Patentanspruchs.
Das Verfahren beschreibt die Lenkung eines Streams entlang eines reservierten Pfades in einem Netzwerk basierend auf den Time-Sensitive Networking Standards gemäß IEEE 802.1, wobei der Reservierungsablauf für den Aufbau eines Pfades in dem Netzwerk modular erfolgt, indem in einem ersten Schritt die Anmeldung des Senders mit einer Talker Advertise Nachricht nur zum ersten erreichbaren Netzwerkelement des Netzwerk übertragen und dort gespeichert wird und die Anmeldung des Empfängers mit einer Listener Ready Nachricht zu einem zweiten erreichbaren Netzwerkelement übertragen und dort gespeichert wird und in einem zweiten Schritt eine Reservierung eines Pfades zwischen dem ersten Netzwerkelement und dem zweiten Netzwerkelement erfolgt auf Basis von den zuvor gespeicherten Informationen.

Die Einführung eines neuen Attributes (L_BRIDGE) in dem für TSN weiterentwickeltem Reservierungsprotokoll ermöglicht es die existierenden Mechanismen im Ethernet Standard besser zu verwenden. Dazu muss sich jeder Empfänger und jeder Sender (bisher für Sender schon vorhanden) im Netzwerk bekannt machen.

Weitere vorteilhafte Ausführungsformen der Erfindung sind durch die Unteransprüche angegeben.

Alle für die Reservierung notwendigen Informationen sind in einer Datenbank gespeichert. Diese Datenbanken befinden sich in den Bridges, wobei die Datenbank aufgeteilt ist in einen zentralen Speicher und in jeweilige Port-Datenbanken für die jeweiligen Richtungen Talker / Sender sowie Listener / Empfänger.
Datenpakete (TLVs) ohne eine Richtungsangabe werden dabei in dem zentralen Speicher abgelegt, zusammen mit der zuletzt gesehenen Paketsequenznummer (StreamID) des Attributs. Datenpakete (TLVs) mit einer Richtungsangabe werden am empfangenden Port in einer Empfangs-Datenbank und am sendenden Port in einer Sende-Datenbank abgelegt. Neu ist dabei das Attribut der L_REGISTRATION.
Der Empfänger überträgt also in seiner Listener Ready Nachricht eine erste Information zur Position des Empfängers, so dass eine Pfadreservierung mit Hilfe einer zweiten Information bezüglich der Position des Senders im Netzwerk eine Reservierung und Pfadeinrichtung durchführen kann.

In einer weiteren vorteilhaften Ausgestaltung der Erfindung ist eine weitere Information in der Talker Advertise Nachricht und/oder Listener Ready Nachricht enthalten zur maximalen zulässigen Latenzzeit (REQ_LATENCY).
Die Reservierung des Pfades geschieht auf Basis der in der Nachricht übermittelten und /oder Latenzzeiten, als akkumulierten Informationen zur Latenzzeit (ACC_LATENCY).
Hier wird die Pfadermittlung basiert auf dem besten Weg aus Sicht der jeweils benötigten Übertragungszeiten zwischen den einzelnen Netzwerkelementen.

Der Empfänger kann sich mit einem Stream, identifiziert durch seine Stream ID, bei dem nächstgelegenen Netzelement registrieren um weitere Daten, insbesondere Streambeschreibungen, vom Netzelement zu erhalten.
Alternativ kann sich der Empfänger mit einem Stream auch so bei dem Netzelement registrieren, dass er nur weitere registrierte Daten vom Netzelement zu erhalten. Dies hat den Vorteil, dass wirklich nur relevante Informationen übertragen werden, was die Netzlast und auch die Auslastung des Listeners bezüglich der Auswertung der empfangenen Informationen reduziert.

Der Empfänger bekommt dann vom Netzwerk nur die für ihn relevanten Informationen mitgeteilt.
Bei einer Änderung von anderen Informationen wird er erst gar nicht benachrichtigt.
Bei bisherigen Bridges ist ein ähnlicher Mechanismus bekannt, genannt "Pruning", bei dem Informationen gezielt nur in dem Netzwerkteil weitergeleitet werden, auf dem die Übertragung möglich ist. Die neue "Listener Pruning" genannte Funktionalität ermöglicht die gezielte Weitergabe von relevanten Informationen an Endgeräte die einem Empfang der Daten (des Streams) interessiert sind.
Die Netzwerkkomponenten können die Anmeldeinformation verwenden, um nur relevante Daten und spätere Änderungen dieser Daten an die Endgeräte weiterzuleiten ("Listener Pruning"). Dadurch wird der Informationsumfang und damit einhergehenden die Anzahl der Pakete reduziert. Dies führt zu einer geringeren Rechenlast in den Endgeräten. Einfache Endgeräte sind dadurch auch in größeren Netzwerken einsetzbar; im Netzwerk können deutlich mehr Streams verwendet werden.

Die Erfindung wird im Weiteren auch durch Figuren erläutert. Dabei zeigen
Figur 1 einen Talker Advertise, also eine erfolgreiche Reservierung im bekannten AVB,
Figur 2 ein Listener Ready, also eine Reservierungsbestätigung,
Figur 3 die Kommunikation auf dem so eingerichteten Pfad,
Figur 4 den neuen modularen Reservierungsablauf Talker Advertise und Listener ready,
Figur 5 die Verteilung von globaler Information aus dem Talker Advertise und Listener ready an alle Netzelemente (Bridges)
Figur 6 das sogenannte Listener Pruning,
Figur 7 verschiedene Ausführungsoptionen für die Pfadeinrichtung im Netz gemäß der Erfindung
   und Figur 8 eine Gesamtübersicht des Vorgehens des bekannten Verfahrens wie in Figuren 1 bis 3 bereit gezeigt.

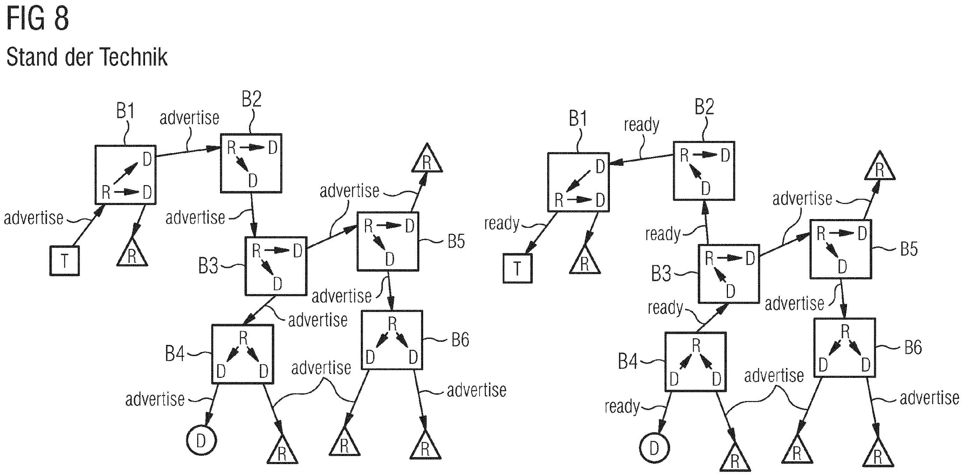

Die Figur 8 zeigt den AVB Reservierungsablauf eines Streams in einem Netz, wie er nach dem bisherigen Vorgehen abläuft. B1 mit B6 sind vermittelnde Netzelemente, sogenannte Bridges. Mit T ist der Sender, der sogenannte Talker bezeichnet. L zeigt die Listener Station, also den angepeilten Empfänger. Zunächst wird in einem ersten Schritt über das sogenannte advertise eine Information an alle geschickt, in der Bridge erfolgt die Registration und Declaration. In Antwort schickt die Listener Station eine Ready Nachricht zurück, welche dafür sorgt, dass der jeweilige Pfad reserviert wird.

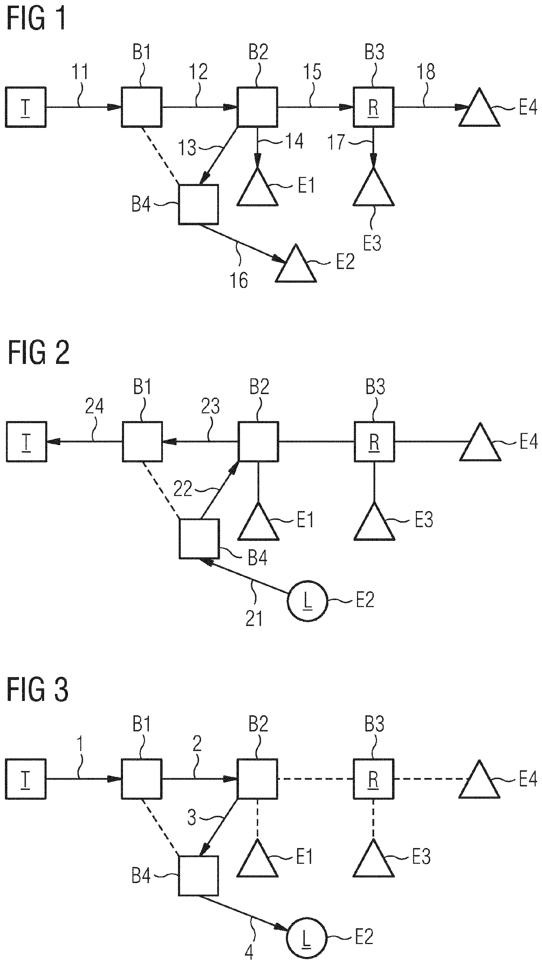

Die Figuren 1 bis 3 beschreiben den alternativen Reservierungsvorgang zu Figur 8 unter Verwendung einer RSTP Root Bridge R. Die Netzelemente / Bridges B1 bis B4 sind über teilweise auch mehrere alternative Routen mit einander verbunden. Es sind Endgeräte E1 bis E4 angeschlossen, eine Bridge B3 ist als RSTP Root Bridge R ausgestaltet, welche die Pfadbestimmung im Netzwerk durchführt. Der Talker Advertise wird über verschiedene Netzelemente 11 bis 18 über das Netzwerk verteilt, so dass jedes Endgerät erreicht wird. In Figur 2 wird dargestellt, dass der angepeilte Empfänger / Listener, das Endgerät E2, seine Listener Ready Nachricht an die nächste angeschlossene Bridge B4 sendet, 21. Von dort wird sie aber nicht, wie in dem in Figur 8 beschriebenen Vorgehen, bis zum Sender / Talker zurück übertragen, sondern sie "wartet" dort auf das nächste Talker Advertise. In Figur 3 sieht man dann die Kommunikation über den reservierten Pfad, 1 bis 4.

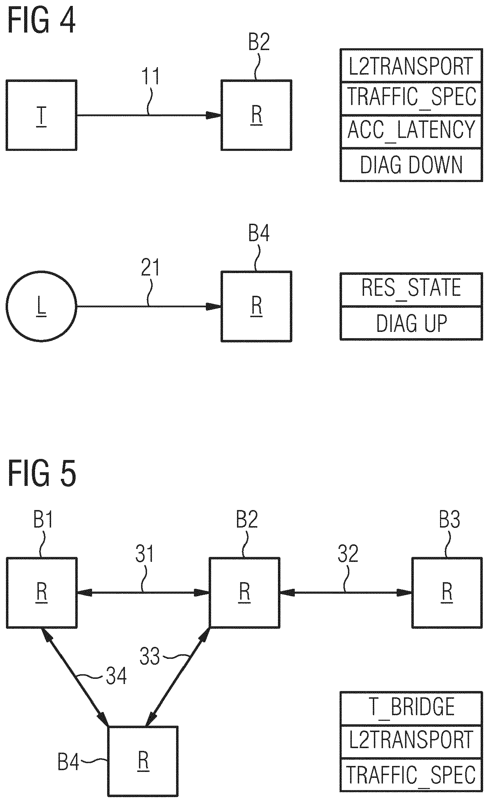

Figur 4 verdeutlicht nochmal den modularen Ablauf der Reservierung. Der Sender, Talker T sendet 11 an das erste Netzelement B2 seine Nachricht, welche dort gespeichert wird, R. Sie enthält die in dem Kasten dargestellten Informationen, über L2TRANSPORT, TRAFFIC_SPEC, ACC_LATENCY und DIAG DOWN.
Analog sendet 21 der Empfänger / Listener L ebenfalls eine Nachricht an das nächste Netzelement B4 zur Speicherung R. Dieses enthält die Informationen RES_STATE und DIAG UP.

In dem zweiten Schritt dann werden die gespeicherten Informationen aus dem Talker Advertise und dem Listener Ready an alle Netzelemente B1 bis B4 zur Speicherung R versendet, 31, 32, 33, 34. T_BRIDGE erzeugt die Talker Information und L_BRIDGE die Listener Information.
Beispielhaft ist die Nachricht T_BRIDGE aufgeführt, welche die Information L2TRANSPORT und TRAFFIC_SPEC enthält.

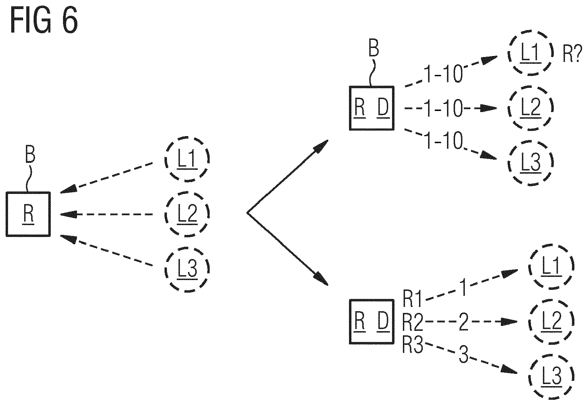

Figur 6 stellt beispielhaft die vorteilhafte Ausgestaltung der Informationsverteilung an den Empfänger wieder. Zunächst propagieren die Empfänger L1, L2 und L3 ihre Informationen, insbesondere Streambeschreibungen, an das nächstgelegene Netz-element B. Normalerweise werden diese (neuen) Informationen 1 - 10 alle und ungefiltert an alle Empfänger / Listener wieder zurück übertragen. Wird nun die Variante gewählt in der eine Filterung erfolgt, so registrieren die jeweiligen Listener L1, L2, L3 sich bzw. ihren Stream beim dem Netzelement, R1, R2, R3. Dann werden nur registrierte Informationen weitergeleitet, wie bei Listener Registrierung entlang Talker Registrierung.

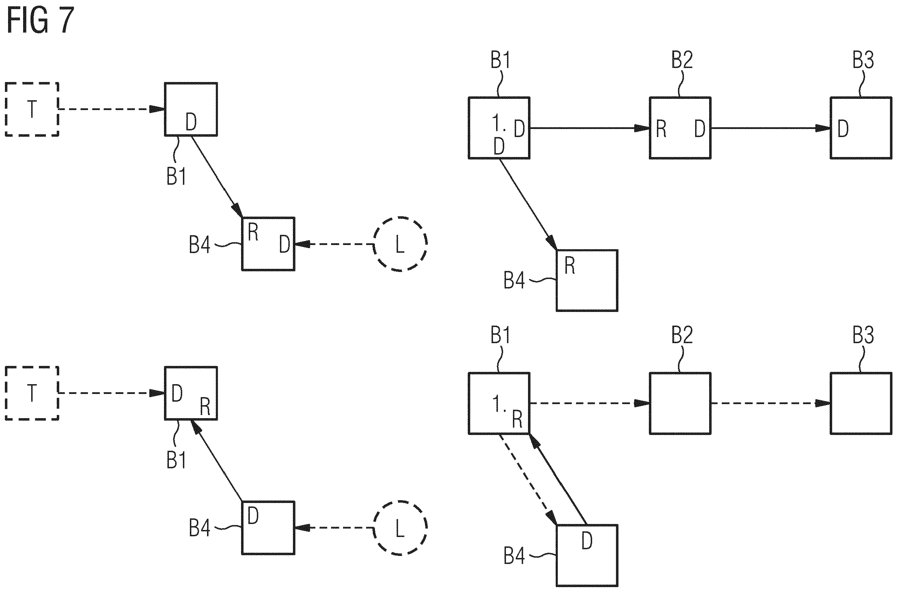

Figur 7 zeigt nun noch einmal die Pfadeinrichtung im Netzwerk für den Stream.
Bei einer lokalen Einrichtung, wie bislang beschrieben, wird die Streambeschreibung (L2TRANSPORT) zusammen mit der Position des Listeners (L_BRIDGE) und der Position des Talkers (T_BRIDGE) im Netzwerk kombiniert und man erhält die Zuordnung der Streams auf dem Pfad, die lokale Konfiguration der FDB.
Die Latenzzeit vom Talker zum Listener wird auf dem Pfad ackumuliert. Alternativ (rechts oben) geschieht die Weitergabe auf dem Pfad von der Talker Bridge B1 zu allen anderen Bridges B2, B3 und B4.
Links unten ist dargestellt, wie der Reservierungsstatus vom Listener zum Talker übermittelt wird, gegeben durch die Information T_BRIDGE. D steht dabei jeweils für Declaration und R für Reservation, analog zu der Darstellung von Figur 8. Unten rechts wird die weitere Alternative dargestellt, wo der Pfad ermittelt wurde mit Hilfe der Latenz-Addition.

Insgesamt zeigt das beschriebene Vorgehen noch weitere wesentliche Vorteile.
Die für die Anwendung wichtige Gesamt-Übertragungszeit kann optimiert werden. Frames an entfernte Endgeräte mit mehreren Hops im Netzwerk können zuerst geschickt werden. Diese werden dann schon übertragen, wenn Frames an nahegelegene Endgeräte noch warten müssen. Auch dadurch kann der Make-Span optimiert werden. Durch die Verkürzung der Zeiten werden auch strengere Anforderungen im industriellen Umfeld erfüllt.

Beim Einsatz des TAS - Time Aware Shapers genügt die lokale Optimierung der Sendereihenfolge in der Steuerung (Speicherprogrammierbare Steuerung oder auch PLC einer industriellen Anlage) meist um die gesamte Kommunikation zu optimieren. Beim Einsatz von TAS werden Netzwerkressourcen exklusiv für die Übertragung reserviert und sind für andere Anwendungen nicht nutzbar. Durch die lokale Optimierung kann das benötigte TAS Fenster verkleinert werden, die exklusiv genutzte Bandbreite kann optimaler ausgelegt werden. Dies ermöglicht die Nutzung der Bandbreite für andere Anwendungen oder eine größere Anzahl von Verbindungen im gleichen Fenster.

Der Einsatz von weiterentwickelten Routing Mechanismen im Ethernet wird ermöglicht. Durch die bekannte Lage der Empfänger (Listener) kann z. B. ein SPB Algorithmus (Shortest Path Bridging) eingesetzt werden, um den jeweils kürzesten Pfad für eine Übertragung zu finden. Dadurch wird die Latenz beim Einrichten eines Streams optimiert.

Im Fehlerfall kann durch das Wissen über die Lage der Endgeräte eine lokale Umschaltung eingesetzt werden. Dies wird z. B. bei IP "Fast-Re-Route" genannt. Jede Bridge kann durch das vorhandene Topologiewissen (z. B. durch IS-IS, Intermediate System to Intermediate System bei SPB) entscheiden ob bei einer Änderung der Streams noch am gleichen Port weitergeleitet werden soll - oder eine andere Alternative verwendet werden muss um die Übertragung weiterhin zu ermöglichen. Durch standardisierte Mechanismen wird eine hohe Verfügbarkeit der Streams im Netzwerk erreicht.
Reservierungen können auch bei Änderungen der Topologie lokal angepasst werden, was das Umschalten von Stream Pfaden beschleunigt.

Durch die Anmeldung der Endgeräte und die Verwendung der vorhandenen Topologieinformation kann lokal im Sender (z. B. PLC im Industrieumfeld) die Reihenfolge der Daten optimiert werden, um den Make-Span zu verkürzen. Dadurch werden kleinere Anwendungszyklen möglich.

Das auch als Fast-Reroute bezeichnete Verfahren basiert auf Topologiewissen und der Bekanntgabe der Teilnehmer einer Verbindung. Lokal kann die neue Weiterleitung berechnet werden und direkt reagiert werden. Eine Kommunikation den benachbarten Netzwerkkomponenten ist nicht erforderlich. Dadurch wird eine deutlich schnellere Umschaltung ermöglicht.

In Industrienetzwerken definiert die Anwendung die benötigten Verbindungen. Dadurch sind bei Sender und Empfänger die benötigten Verbindungsidentifikatoren, Stream IDs, bekannt. Durch die Anmeldung vor dem Empfang von Stream Informationen werden nur relevante Informationen weitergegeben.
Nicht zuletzt ist der Einsatz einfacherer und damit kostengünstigerer Endgeräte selbst in großen Netzwerken möglich, da der Ressourcenbedarf in Netzwerkkomponenten geringer wird, durch den Einsatz einfacherer Netzwerkkomponenten oder auch mehrere Anwendungen im Netzwerk zu betreiben.

## Patentansprüche

1. Verfahren zur Lenkung eines Streams entlang eines reservierten Pfades in einem Netzwerk basierend auf den Time-Sensitive Networking Standards gemäß IEEE 802.1, wobei der Reservierungsablauf für den Aufbau eines Pfades in dem Netzwerk modular erfolgt, indem
- in einem ersten Schritt die Anmeldung des Senders (T) mit einer Talker Advertise Nachricht (11) nur zum ersten erreichbaren Netzwerkelement (B2) des Netzwerks übertragen und dort gespeichert (R) wird und
die Anmeldung des Empfängers (L) mit einer Listener Ready Nachricht (21) zu einem zweiten erreichbaren Netzwerkelement (B4) übertragen und dort gespeichert (R) wird und
- in einem zweiten Schritt eine Reservierung eines Pfades zwischen dem ersten Netzwerkelement (B2) und dem zweiten Netzwerkelement (B4) erfolgt auf Basis von den zuvor gespeicherten Informationen.

2. Verfahren gemäß Patentanspruch 1,
**dadurch gekennzeichnet, dass**
alle für die Reservierung notwendigen Informationen in einer Datenbank in einem vermittelnden Netzelement (B) gespeichert sind, wobei es eine zentrale Datenbank gibt, sowie für jeden Port des Netzelements jeweils für Sende-Richtung und Empfangsrichtung.

3. Verfahren gemäß einem der vorherigen Patentansprüche, **dadurch gekennzeichnet, dass**
der Empfänger (L) in seiner Listener Ready Nachricht (21) eine erste Information (L_3RIDGE) zur Position des Empfängers überträgt, so dass eine Pfadreservierung mit Hilfe einer zweite Information bezüglich der Position des Senders (T_BRIDGE) im Netzwerk eine Pfadeinrichtung durchführen kann.

4. Verfahren gemäß einem der vorherigen Patentansprüche, **dadurch gekennzeichnet, dass**
eine weitere Information in der Talker Advertise Nachricht (11) und/oder Listener Ready Nachricht (21) enthalten ist zur Latenzzeit (REQ_LATENCY).

5. Verfahren gemäß einem der vorherigen Patentansprüche, **dadurch gekennzeichnet, dass**
die Reservierung des Pfades geschieht auf Basis der gespeicherten akkumulierten Informationen zur Latenzzeit (ACC_LATENCY).

6. Verfahren gemäß einem der vorherigen Patentansprüche, **dadurch gekennzeichnet, dass**
der Empfänger (L1, L2, L3) sich mit einem Stream (Stream ID) bei dem Netzelement (B) registrieren kann um weitere Daten (1-10) vom Netzelement zu erhalten.

7. Verfahren gemäß Patentanspruch 6,
**dadurch gekennzeichnet, dass**
der Empfänger (L1, L2, L3) sich mit einem Stream (Stream ID) bei dem Netzelement (B) registrieren kann um weitere registrierte Daten (1, 2 ,3) vom Netzelement zu erhalten.

8. Vorrichtung geeignet zur Durchführung des Verfahrens gemäß der Merkmale eines der Patentansprüche 1 bis 7.

## Claims

1. Method for guiding a stream along a reserved path in a network based on the Time-Sensitive Networking standard in accordance with IEEE 802.1, wherein the reservation procedure to create a path in the network is performed in a modular manner in that,
- in a first step, the registration of the transmitter (T) is transmitted by way of a Talker Advertise message (11) only to the first reachable network element (B2) of the network and is stored (R) there, and
the registration of the receiver (L) is transmitted by way of a Listener Ready message (21) to a second reachable network element (B4) and is stored (R) there, and
- in a second step a path is reserved between the first network element (B2) and the second network element (B4) on the basis of the previously stored information.

2. Method according to Patent Claim 1,
**characterized in that**
all of the information required for the reservation is stored in a database in an intermediate network element (B), wherein there is a central database and, for each port of the network element, in each case for transmission direction and reception direction.

3. Method according to either of the preceding patent claims,
**characterized in that**
the receiver (L) transmits first information (L_BRIDGE) about the position of the receiver in its Listener Ready message (21), such that a path reservation is able to perform a path setup using second information in relation to the position of the transmitter (T_BRIDGE) in the network.

4. Method according to one of the preceding patent claims, **characterized in that**
further information is contained in the Talker Advertise message (11) and/or Listener Ready message (21) about the latency time (REQ_LATENCY).

5. Method according to one of the preceding patent claims, **characterized in that**
the path is reserved on the basis of the stored accumulated information about the latency time (ACC_LATENCY).

6. Method according to one of the preceding patent claims, **characterized in that**
the receiver (L1, L2, L3) is able to register with the network element (B) with a stream (stream ID) in order to receive further data (1-10) from the network element.

7. Method according to Patent Claim 6,
**characterized in that**
the receiver (L1, L2, L3) is able to register with the network element (B) with a stream (stream ID) in order to receive further registered data (1, 2, 3) from the network element.

8. Device suitable for performing the method in accordance with the features of one of Patent Claims 1 to 7.

## Revendications

1. Procédé pour orienter un flux le long d'un chemin réservé dans un réseau sur la base du Time-Sensitive Networking Standard selon IEEE 802.1, le déroulement de la réservation pour l'établissement d'un chemin dans le réseau se faisant de manière modulaire, par le fait que :
- dans une première étape, la connexion de l'émetteur (T) n'est transmise avec un message Talker Advertise (11) qu'au premier élément de réseau joignable (B2) du réseau et y est sauvegardée (R) et
la connexion du récepteur (L) est transmise avec un message Listener Ready (21) à un deuxième élément de réseau joignable (B4) et y est sauvegardée (R) et,
- dans une deuxième étape, il est procédé à une réservation d'un chemin entre le premier élément de réseau (B2) et le deuxième élément de réseau (B4) sur la base des informations préalablement sauvegardées.

2. Procédé selon la revendication 1, **caractérisé en ce que** toutes les informations requises pour la réservation sont sauvegardées dans une base de données dans un élément de réseau transmetteur (B), une base de données centrale existant, ainsi que pour chaque port de l'élément de réseau respectivement pour la direction d'émission et la direction de réception.

3. Procédé selon l'une des revendications précédentes, **caractérisé en ce que** le récepteur (L) transmet, dans son message Listener Ready (21), une première information (L_BRIDGE) sur la position du récepteur, de sorte qu'une réservation de chemin peut effectuer un aménagement de chemin à l'aide d'une deuxième information relative à la position de l'émetteur (T_BRIDGE) dans le réseau.

4. Procédé selon l'une des revendications précédentes, **caractérisé en ce qu'**une autre information est contenue dans le message Talker Advertise (11) et/ou le message Listener Ready (21) concernant le temps de latence (REQ_LATENCY).

5. Procédé selon l'une des revendications précédentes, **caractérisé en ce que** la réservation du chemin se fait sur la base des informations accumulées sauvegardées concernant le temps de latence (ACC_LATENCY).

6. Procédé selon l'une des revendications précédentes, **caractérisé en ce que** le récepteur (L1, L2, L3) peut s'enregistrer avec un flux (Stream ID) auprès de l'élément de réseau (B) pour recevoir d'autres données (1-10) de l'élément de réseau.

7. Procédé selon la revendication 6, **caractérisé en ce que** le récepteur (L1, L2, L3) peut s'enregistrer avec un flux (Stream ID) auprès de l'élément de réseau (B) pour recevoir d'autres données enregistrées (1, 2, 3) de l'élément de réseau.

8. Dispositif adapté pour exécuter le procédé selon les caractéristiques d'une des revendications 1 à 7.
